(19) Europäisches Patentamt

European Patent Office

Office européen des brevets

(11) Veröffentlichungsnummer: **0 093 966**
**B1**

(12) **EUROPÄISCHE PATENTSCHRIFT**

(45) Veröffentlichungstag der Patentschrift: **02.03.88**

(21) Anmeldenummer: **83104169.4**

(22) Anmeldetag: **28.04.83**

(51) Int. Cl.⁴: **G 11 B 5/84**

(54) Verfahren zur Herstellung einer Magnetdispersion.

(30) Priorität: **07.05.82 DE 3217099**

(43) Veröffentlichungstag der Anmeldung:
**16.11.83 Patentblatt 83/46**

(45) Bekanntmachung des Hinweises auf die
Patenterteilung:
**02.03.88 Patentblatt 88/09**

(84) Benannte Vertragsstaaten:
**DE FR IT**

(56) Entgegenhaltungen:
**EP-A-0 010 689**
**FR-A-2 311 588**

(73) Patentinhaber: **BASF Aktiengesellschaft**
**Carl-Bosch-Strasse 38**
**D-6700 Ludwigshafen (DE)**

(72) Erfinder: **Melzer, Milena**
**Kirchenstrasse 116**
**D-6700 Ludwigshafen (DE)**
Erfinder: **Jakusch, Helmut**
**Lorscher Ring 6C**
**D-6710 Frankenthal (DE)**
Erfinder: **Grau, Werner, Dr.**
**Tuchbleiche 5**
**D-6712 Bobenheim-Roxheim (DE)**
Erfinder: **Koester, Eberhard, Dr.**
**Max-Slevogt-Strasse 23**
**D-6710 Frankenthal (DE)**
Erfinder: **Loeser, Werner, Dr.**
**Klagenfurter Strasse 16**
**D-6700 Ludwigshafen (DE)**
Erfinder: **Polke, Reinhard, Dr.**
**Alemannenstrasse 9**
**D-6704 Mutterstadt (DE)**
Erfinder: **Schaedel, Guenter, Dr.**
**Adelsheimer Strasse 30**
**D-6800 Mannheim 51 (DE)**

Courier Press, Leamington Spa, England.

EP 0 093 966 B1

**0 093 966**

(72) Erfinder: **Ohlinger, Manfred, Dr.**
**Anselm-Feuerbach-Strasse 13**
**D-6710 Frankenthal (DE)**
Erfinder: **Vaeth, Guenter**
**Woogstrasse 35**
**D-6703 Limburgerhof (DE)**

# 0 093 966

**Beschreibung**

Die Erfindung bezieht sich auf ein Verfahren zur Herstellung einer Magnetdispersion für magnetische Aufzeichnungsträger, bei dem magnetisch anisotropes Material in einem Polymerbindemittel und in einem organischen Lösungsmittel dispergiert wird.

Verfahren zur Herstellung von hochaussteuerbaren Aufzeichnungsträgern sind hinreichend bekannt. Sie betreffen sehr oft die Herstellung der Magnetpigmente selbst, z.B. beim γ-Eisen(III)-Oxid das Kristallwachstum der Ausgangsprodukte α-, β- oder γ-FeOOH, welche durch Nadellänge und -dicke, Teilchengrößenspektrum und die spezifische Oberfläche definiert sind. Eine Reihe weiterer Verfahren befaßt sich mit der Umwandlung der unmagnetischen Eisenoxidhydroxid-Modifikationen bei weitgehendem Formerhalt in ferrimagnetisches Eisen(III)-Oxid. Andere Verfahren beschreiben beispielsweise das Aufbringen einer Kobaltferrithülle auf ferrimagnetisches Eisen(III)-Oxid zur Erzielung einer höheren Koerzitivkraft sowie die Herstellung von Chromdioxid oder von nadelförmigem Metallpigment.

Sowohl bei der hydrothermalen Herstellungsweise als auch bei der sich daran anschließenden Aufbereitung entstehen Aggregate bzw. Agglomerate mit sehr unterschiedlichem Teilchendurchmesser. Teilweise entstehen diese Aggregate bzw. Agglomerate auch nach einem nachgeschalteten Finishprozeß bei der Trocknung der Pigmentsuspension oder -paste, wobei die nadelförmigem Teilchen je nach Art und Weise ihrer Gewinnung dendritisch verzweigt und teilweise versintert sind.

In der Schicht von Aufzeichnungsträgern sollen diese Magnetpigmente bevorzugt als Einzelnadeln in der Vorzugsrichtung in gleichen Abständen untereinander vorliegen, wobei die Zwischenräume mit Bindemittel und Dispergierhilfsmittel bei möglichst wenig Luftzwischenräumen ausgefüllt sein sollen. Entsprechend diesen Forderungen sollte die Dispergierung schonend erfolgen, d.h. beim Dispergiervorgang in diskontinuierlichen Kugelmühlen, Rührwerksmühlen, kontinuierlichen Rohrmühlen oder durch Kesselmahlung weitgehend so, daß die Aggregate bzw. Agglomerate zerstört werden, ohne daß Einzelnadeln brechen.

Die Magnetpigmente werden nach ihrer Herstellung entsprechend bisher bekannten Verfahren mit Pralltellermühlen, Hammermühlen oder Zahnscheibenmühlen gemahlen, wobei die beim Pigmentherstellungsprozeß entstandenen Aggregate bzw. Agglomerate zerteilt werden.

Nachteile dieser Mahlverfahren sind neben der geringen Schüttdichte von ≤0,5 g/cm³ und hohem Feinstkornanteil, was bei Verarbeitung des Materials zu einer Dispersion zu Benetzungsschwierigkeiten und so zu einem besonders hohen Lösungsmittelbedarf führt, die Beschädigung der Pigmentstruktur, da bei noch nicht vollständig zerteilten Aggregaten und Agglomeraten die Einzelpigmentnadeln bereits teilweise zerbrochen werden.

Ein bekanntes Verfahren zur Erhöhung der Schüttdichte der Magnetpigmente ist die Verdichtung auf einem Walzenstuhl, bei dem das Pigment auf ein Schüttgewicht von ca. 0,7 g/cm³ verdichtet wird. Dadurch soll eine Verbesserung der Kornstruktur und gleichzeitig eine Kompaktierung des Feinkornanteils erreicht werden. Dabei werden jedoch zum Teil auch die nadelförmigen Teilchen gebrochen, so daß die Schaltfeldverteilung des Pigments und damit die magnetischen Eigenschaften eines daraus hergestellten Informationsträgers negativ beeinflußt werden. Ferner ist das Teilchengrößenspektrum wenig einheitlich. Derartig aufbereitete Pigmente benötigen daher bei der Dispersionsherstellung einen hohen Dispergieraufwand.

Als Aufbereitungsmethode für Farbpigmente organischer oder anorganischer Art ist die Strahlmahlung hinreichend bekannt. Diese Pigmente bestehen jedoch aus isotropen, meist kugelförmigen Einzeilteilchen.

In der technischen Fachzeitschrift "defazet-aktuell, 26. Jg., Nr. 5, 1972", Seite 255—259, wird von der Mikronisierung von kubischen Eisenoxidpigmenten mit Hilfe des Strahlmahlens zur Qualitätsverbesserung und Rationalisierung bei der Lackherstellung berichtet. In eine Mahlkammer strömt tangential überhitzter Dampf von 15 atü und ca. 200°C ein und versetzt dabei das Pigment in kreisende Bewegung. Durch Zusammenprall der Teilchen erfolgt eine Aufteilung und damit eine Zerstörung größerer Agglomerate, was als entscheidender Vorteil der Mikronisierung kubischer Pigmente angesehen wird. Der Einfluß auf die Korngrößenverteilung wird jedoch als gering bezeichnet. Nadelförmige Pigmentteilchen sollen hingegen zerbrochen werden.

Strahlmahlung anisotroper Pigmente nadelförmiger Struktur war bisher nicht für möglich gehalten worden, weil hier eine Zerstörung der nadelförmigen Struktur erwartet wurde.

Die Aufgabe vorliegender Erfindung bestand nun darin, ein Verfahren zur Herstellung einer Dispersion mit magnetisch anisotropen Pigmenten nadelförmiger Struktur zu entwickeln, bei dem neben einer möglichst weitgehenden Aufteilung von Agglomeraten ohne Zerstörung der nadelförmigen Teilchen diese in ihrem Größenspektrum einheitlicher und leichter zur dispergieren sind als bisher.

Die Lösung der Aufgabe besteht in einem Verfahren, wie es in den Patentansprüchen gekennzeichnet ist.

Bei der Strahmahlung sind keine die Mahlung bewirkenden Fremdkörper im Eingriff. Vielmehr erfolgt der Mahlvorgang durch das mit dem Trägergas beladene Pigment selbst. Durch Variation der Mahlbedingungen, z.B. das Verhältnis Feststoff zu Gas, den Durchsatz pro Zeiteinheit, den Vordruck des Gases sowie durch die Bauart der Mühle können die Mahlbedingungen so optimiert werden, daß ein enges

3

Teilchenspektrum von Primärteilchen mit kleinen Agglomeraten erreicht wird, ohne daß Primärteilchen selbst zerstört werden. Das Verteilungsspektrum kann dabei durch eine Siebanalyse nach dem Luftstrahlprinzip die weitgehende Schonung des Pigments wiederum durch vergleichende Bestimmung der Schaltfeldstärke vor und nach dem Mahlvorgang durchgeführt werden.

Die Strahlmahlung ersetzt die übliche Mahlung und Walzenstuhlverdichtung. Dabei kann das Magnetpigment allein ohne Zusatzstoffe oder mit Vorteil für das Dispergierverfahren und daraus hergestellter Aufzeichnungsträger zusammen mit Dispergiermitteln oder sogar mit Dispergiermittel und Bindemittel gemahlen werden. Die Zusatzstoffe, mit denen das Magnetpigment zusammen gemahlen wird, können entweder festen oder flüssigen Charakter haben. Sind diese Zusatzstoffe Komponenten der Magnetdispersion, wie Dispergiermittel und Bindemittel, kann durch Strahlmahlung zugleich eine Vordispergierung erreicht werden, so daß die Dispergierdauer in der nachfolgenden Dispergiereinrichtung herkömmlicher Art deutlich reduziert werden kann. Bei Strahlmahlung zusammen mit Bindemittel entfällt darüber hinaus die Herstellung der Bindemittellösung.

Darüber hinaus hat sich gezeigt, daß die Koerzitivfeldstärke strahlgemahlener Pigmente deutlich höher ist als bei Aufbereitungsverfahren herkömmlicher Art. Die Schaltfeldverteilung liegt ebenfalls günstiger. Dies wirkt sich besonders auf die Aufzeichnungseigenschaften von Informationsträgern für kurze Wellenlängen positiv aus. Dabei ist durch die weitgehende Reduzierung des unerwünschten Feinstkornanteils auch die Kopierdämpfung besser.

Wietere Vorteile der strahlgemahlenen Magnetpigmente bestehen in leichter Benetzbarkeit mit Lösungsmittel und wesentlicher Verringerung des Lösungsmittelanteils im Dispersionsansatz. Dadurch können lösungsmittelärmere Dispersionen hergestellt werden als bei herkömmlich aufbereiteten Pigmenten, was sich positiv auf die Magnetschichtstruktur (geringere Porösität) und somit auf die Aufzeichnungseigenschaften auswirkt.

Die durch Strahlmahlung erhaltene niedrige Schüttdichte der Magnetpigmente, z.B. bei $\gamma$-Fe$_2$O$_3$-Pigmenten <0,3 g/cm$^3$, erweist sich überraschenderweise nicht als Hindernis für eine gute Benetzbarkeit mit Lösungsmittel; vielmehr ist hier die Benetzbarkeit besser und der Lösungsmittelbedarf deutlich niedriger als beim nach bekannten Verfahren aufbereitetem, beispielsweise im Walzenstuhl verdichtetem Magnetpigment mit Schüttgewicht von 0,7 g/cm$^3$.

Weiter vorteilhaft ist der geringere Grobkornanteil im in Fachkreisen als Slurry bezeichneten Dispersionsansatz und die damit verbundene bessere Pumpbarkeit als bei nach herkömmlichen Verfahren aufbereiteten Magnetpigmenten.

In manchen Fällen, z.B. aus Transportgründen, kann das niedrige Schüttgewicht des Magnetpigments, wie es nach der Strahlmahlung anfällt, von Nachteil sein. Durch Aufbaugranulierung kann hier das Schüttgewicht auf das gewünschte Maß, z.B. auf 0,5—0,7 g/cm$^3$ bei $\gamma$-Fe$_2$O$_3$, erhöht werden, wobei die durch Strahlmahlung erreichten Verbesserungen des Magnetpigments und des aus ihm hergestellten Aufzeichnungsträgers voll erhalten bleiben.

Die Strahlmahlung bringt weiter Vorteile bei Vordispergierung von $\gamma$-Fe$_2$O$_3$ (Fe$_3$O$_4$) für eine nachfolgende Co- oder Sn-Dotierung, weil bei der Dotierung eine Umhüllung der nadelförmigen Teilchen und nicht der Agglomerate bzw. Aggregate wichtig ist, um Produkte mit hoher Koerzitivfeldstärke und enger Schaltfeldverteilung zu erhalten.

Ebenfalls vorteilhaft zeigt sich das Strahlmahlen von Metallpigment zusammen mit einer Passivierung in einem Stickstoff-Luftgemisch bzw. zusammen mit sonstigen Passivierungsmitteln. Aufgebrochene Pigmentteilchen oder abgeplatzte Oxidhüllen können so nachpassiviert bzw. ein feinteiliger Oxidabrieb abgesondert werden.

Gute Ergebnisse bringt auch die Strahlmahlung der Zwischenprodukte bei der Magnetpigmentherstellung, z.B. des nadelförmigen $\gamma$-FeOOH vor der Umwandlung.

Zum besseren Veständnis des vorstehend erläuterten Verfahrens sind nachfolgend Ausführungsbeispiele beschrieben.

Beispiel 1
Strahlmahlung des Magnetpigments ohne Zusatzstoffe

$\gamma$-Eisenoxid-Pigment mit einer spezifischen Oberfläche von 18 m$^2$/g und einer Koerzitivkraft von 27,9 kA/m, in der Form von Granulat unregelmäßiger Form und Größe, wie sie nach der Pigmentherstellung anfallen mit Schüttgewicht von 0,45 g/cm$^3$ wird in einer Strahlmühle von 170 mm Durchmesser mit einem Durchsatz von 8 kg/h, bei einem Strahldruck von 3,5 bar und mit Stickstoff gemahlen. Das strahlgemahlene Pigment wird nachfolgend folgendermaßen verarbeitet:

In eine Stahlkugelmühle von 6 l Rauminhalt, gefüllt mit 8 kg Stahlkugeln mit einem Durchmesser von 4 bis 6 mm, werden 900 g dieses strahlgemahlenen $\gamma$-Eisenoxidpigments zusammen mit 22,5 g eines marktüblichen Dispergiermittels, das aus 50% Lösung eines Salzes aus langkettigen Polyaminamiden und eines hochmolekularen sauren Esters in Toluol besteht, mit 794 g eines Lösungsmittelgemisches von gleichen Teilen Tetrahydrofuran und Dioxan und 300 g einer 20%igen Lösung eines Copolymers von Vinylchlorid, Dimethylmaleinat und Diethylmaleinat im Verhältnis 80:10:10 und einem K-Wert von 60 in oben genanntem Lösungsmittelgemisch eingefüllt und 24 Stunden lang dispergiert. Danach werden 91 g der obengenannten Lösung von Copolymer Vinylchlorid/Dimethylmaleinat/Diethylmaleinat, 852 g einer 13%igen Lösung eines Polyesterpolyurethans vom K-Wert 60, hergestellt aus einem Polyester aus Butandiol und Adipinsäure, Butandiol, Trimethylolpropan und Diphenylmethandiisocyanat, in einem Gemisch aus gleichen Teilen Tetrahydrofuran und Dioxan, 12,6 g übliches Gleitmittel zugesetzt und weitere 2 Stunden dispergiert.

Die erhaltene Dispersion wird unter Druck durch einen Filter mit 5 Poren filtriert und auf eine 12 µm dicke Polyethylenterephthalatfolie mittels eines üblichen Linealgießers aufgetragen. Die beschichtete Folie wird nach Durchlaufen eines Magnetfeldes zum Ausrichten der Magnetteilchen bei Temperaturen zwischen 50 und 90°C getrocknet. Nach der Trocknung wird die Magnetschicht durch Hindurchziehen zwischen auf 70°C beheizten Walzen unter einem Liniendruck von 200 kp/cm verdichtet und geglättet, so daß die Dicke der Magnetschicht 4,5 µm beträgt, und dann in 3,81 mm breite Bänder für Audioanwendung geschnitten. Die Messung der magnetischen Eigenschaften wird in einem Meßfeld von 100 kA/m durchgeführt. Die elektroakustischen Werte werden gemäß DIN 45401, DIN 45403 und DIN 45512 B1. 12 gegen das Bezugsband IEC 1 geprüft.

Die Eigenschaften des Pigments und des Bandes sind in der Tabelle aufgeführt.

Beispiel 2
Strahlmischung des Magnetpigments mit Dispergiermittel

γ-Eisenoxid mit einer spezifischen Oberfläche von 18 m²/g und einer koerzititvkraft von 27,9 kA/m in der Form von Granulat unregelmäßiger Form und Größe, wie sich nach der Pigmentherstellung anfallen, wird mit einem Dispergiermittel, das aus einer 50%igen Lösung eines Salzes aus langkettigen Polyaminamiden und eines hochmolekularen sauren Esters in Toluol besteht, in einem Schaufelmischer im Verhältnis 100 Gew.-Teile Pigment zu 2,5 Gew.-Teile Dispergiermittel vorgemischt. Dieses Gemisch wird in einer Strahlmühle von 170 mm Durchmesser mit einem Durchsatz von 8 kg/h bei einem Strahldruck von 5 bar mit Stickstoff gemahlen.

Das mit Dispergiermittel strahlgemahlene Pigment wird die folgt verarbeitet:

In eine Stahlkugelmühle von 6 l Rauminhalt, gefüllt mit 8 kg Stahlkugeln mit einem Durchmesser von 4 bis 6 mm, werden 922 g dieses Gemisches von Pigment und Dispergiermittel, 794 g eines Lösungsmittelgemisches von gleichen Teilen Tetrahydrofuran und Dioxan und 300 g einer 20%igen Lösung eines Copolymers von Vinylchlorid, Dimethylmaleinat und Diethylmaleinat im Verhältnis 80:10:10 und einem K-Wert von 60 in oben genanntem Lösungsmittelgemisch eingefüllt und 24 Stunden lang dispergiert. Danach werden 91 g der obengenannten Lösung von Copolymer Vinylchlorid/Dimethylmaleinat/Diethylmaleinat, 852 g einer 13%igen Lösung eines Polyesterpolyurethans von K-Wert 60, hergestellt aus einem Polyester aus Butandiol und Adipinsäure, Butandiol, Trimethylolpropan und Diphenylmethandiisocyanat, in einem Gemisch aus gleichen Teilen Tetrahydrofuran und Dioxan, 12,6 g übliches Gleitmittel zugesetzt und weitere 2 Stunden dispergiert.

Die erhaltene Dispersion wird wie im Beispiel 1 zu einem Audioband verarbeitet, und in gleicher Weise die magnetischen Eigenschaften und die elektroakustischen Werte dieses Bandes gemessen.

Die Eigenschaften des mit Dispergiermittel strahlgemahlenen Pigments und des aus ihm hergestellten Bandes sind in der Tabelle angegeben.

Beispiel 3
Strahlmischung des Magnetpigments mit Dispergiermittel und anschließende Aufbaugranulierung

Das zusammen mit Dispergiermittel strahlgemahlene Pigment nach dem Beispiel 2 wird anschließend durch Aufbaugranulierung vom anfänglichem Schüttgewicht von 0,19 g/m² auf das Schüttgewicht von 0,50 verdichtet. Diese Verdichtung wird in einem mit 20 Upm sich drehenden und zu 50 Vol.-% mit strahlgemahlenem Gemisch vom Magnetpigment mit Dispergiermittel gefüllten, walzenförmigen Gefäß von 250 ml Rauminhalt und von 8 cm Durchmesser innerhlab von 2 Stunden erreicht.

Das so verdichtete Pigment wird ebenfalls zu einem Audioband verarbeitet und seine Eigenschaften gemessen.

Die Eigenschaften des mit Dispergiermittel strahlgemahlenen und nachfolgend durch Aufbaugranulierung verdichteten Pigments und des aus ihm hergestellten Bandes sind in der Tabelle aufgeführt.

Beispiel 4
Strahlmahlung des Magnetpigments zusammen mit Dispergiermittel und Bindemittel

Das Copolymer von Vinylchlorid, Dimethylmaleinat und Diethylmaleinat im Verhältnis 80:10:10 und einem K-Wert von 60 wird nach Vorzerkleinerung in einer Strahlmühle mit einem Mahlraum von 170 mm Durchmesser mit einem Durchsatz von 2 kg/h bei einem Strahldruck von 8 bar unter Stickstoff gemahlen.

γ-Eisenoxid mit einer spezifischen Oberfläche von 18 m²/g und einer Koerzitivkraft von 27,9 kA/m in der Form zu unregelmäßigem Granulat, wie sich nach der Pigmentherstellung anfallen, wird mit einem Dispergiermittel, das aus einer 50%igen Lösung eines Salzes aus langkettigen Polyaminamiden und eines hochmolekularen sauren Esters in Toluol besteht, in einem Schaufelmischer im Verhältnis 100 Gew.-Zeile Pigment zu 2,5 Gew.-Teile Dispergiermittel vorgemischt. In eine Strahlmühle mit einem Mahlraum von 170 mm Durchmesser und zwei Schneckendosiereinrichtungen werden mit einer Dosiereinrichtung das oben beschriebene Gemisch aus Magnetpigment und Dispergiermittel sowie das oben beschriebene vorgemahlene Copolymer im Verhältnis 102,5 Gew.-Teile Pigment mit Dispergiermittel zu 8,7 Gew.-Teilen Copolymer eingeführt und mit einem Durchsatz von 8 kg/h bei einem Strahldruck von 5 bar unter Stickstoff gemahlen.

Dieses strahlgemahlene Gemisch wird wie folgt verarbeitet:

In eine Stahlkugelmühle von 6 l Rauminhalt, gefüllt mit 8 kg Stahlkugeln mit einem Durchmesser von 4 bis 6 mm, werden 1000 g dieses strahlgemahlenen Gemisches und 1107 g eines Lösungsmittelgemisches aus gleichen Teilen Tetrahydrofuran und Dioxan eingefüllt und 24 Stunden dispergiert. Danach werden 852 g einer 13%igen Lösung eines Polyesterpolyurethans vom K-Wert 60, hergestellt aus einem Polyester aus Butandiol und Adipinsäure, Butandiol, Trimethylolpropan und Diphenylmethandiisocyanat in einem Gemisch aus gleichen Teilen Tetrahydrofuran und Dioxan, 12,6 g übliches Gleitmittel zugesetzt und 2 Stunden dispergiert.

Die erhaltene Dispersion wird wieder zu einem Audioband verarbeitet und die magnetischen Eigenschaften und die elektroakustischen Werte dieses Bandes gemessen.

Die Ergebnisse sind in der Tabelle zusammengestellt.

Beispiel 5

Verarbeitung des walzenstuhlverdichteten Magnetpigments

Zum Vergleich wird das nicht strahlgemahlene, nach einem bereits bekannten Verfahren im Walzenstuhl auf Schüttgewicht von 0,7 g/cm³ verdichtete Magnetpigment in gleicher Art zu einem Audioband verarbeitet, jedoch mit dem Unterschied, daß beim Herstellen der Dispersion für 900 g des walzenstuhlverdichteten $\gamma$-Fe$_2$O$_3$-Pigments 894 g des aus gleichen Teilen Tetrahydrofuran und Dioxan bestehenden Lösungsmittelgemisches verwendet werden muß, um die für das Dispergieren geeignete Rheologie zu erreichen. Die Dispergierdauer beträgt hier 48 Stunden, um die gleiche Mahlfeinheit, mikroskopisch beurteilt, wie beim strahlgemahlenen Pigment zu erreichen. Die Eigenschaften des walzenstuhlverdichteten Pigments und des aus ihm hergestellten Bandes sind ebenfalls in der Tabelle angegeben.

## TABELLE
### Strahlmahlung des Magnetpigments

| | Beispiele mit $\gamma$-Fe$_2$O$_3$ | | | | |
|---|---|---|---|---|---|
| | 1 | 2 | 3 | 4 | 5 |
| **Magnetpigment-Pulvereigenschaften** | | | | | |
| Koerzitivkraft (kA/m) | 26,5 | 26,7 | 26,6 | 26,7 | 25,7 |
| Schaltfeldvertretung[+] | 0,54 | 0,52 | 0,53 | 0,52 | 0,57 |
| Schüttgewicht (g/cm³) | 0,18 | 0,19 | 0,55 | 0,20 | 0,72 |
| Grobkernanteil Slurry nach Grindometertest | 15 µm | 15 µm | 15 µm | 15 µm | >100 µm |
| **Bandeigenschaften** | | | | | |
| **Magnetwerte:** | | | | | |
| Koerzitivkraft (kA/m) | 26,0 | 26,2 | 26,0 | 26,2 | 25,0 |
| magnetische Remanenz (mT) | 175 | 178 | 178 | 180 | 175 |
| relative Remanenz | 0,87 | 0,88 | 0,88 | 0,89 | 0,86 |
| Richtfaktor | 3,0 | 3,2 | 3,1 | 3,2 | 2,9 |
| **Elektroakustische Werte (Bezugsband IEC 1)** | | | | | |
| Höhenaussteuerbarkeit 10 kHz ($\Delta$dB) | ±0 | +0,5 | +0,3 | +0,5 | −1,0 |
| Kopierdämpfung ($\Delta$dB) | +1,0 | +1,5 | +1,0 | +1,5 | −1,0 |

[+]Die Schaltfeldverteilung ist ein Maß für die magnetische Gleichförmigkeit der Teilchen. Sie wird aus der Gleichfeld-Entmagnetisierungskurve (Remanenzkurve) als

$$\frac{\Delta H}{H_R}$$

bestimmt, wobei $\Delta H$ die Felddifferenz, bei der 75% bzw. 25% der Teilchen umschalten, und $H_R$ die Remanenzkoerzitivfeldstärke ist.

Aus dem Vergleich der Beispiele 1 bis 5 ergibt sich die Überlegenheit der strahlgemahlenen Pigmente gegenüber dem nach bisher üblichem Verfahren aufbereiteten, walzenstuhlverdichteten Pigment. Neben technologischen Vorteilen, wie geringerer Lösungsmittelbedarf und damit verbundene Lösungsmittelersparnisse, geringerer Grobkornanteil im Slurry und kürzerer Dispergierdauer, zeigen sich auch wesentliche

6

Vorteile in höherer Koerzitivkraft und Schaltfeldverteilung des Pigments und dementsprechend auch in der höheren Koerzitivkraft, relativen Remanenz, Höhenaussteuerbarkeit sowie Kopierdämpfung des Bandes bei gleichwertigen übrigen, hier nicht angegebenen Eigenschaften.

**Patentansprüche**

1. Verfahren zur Herstellung einer Magnetdispersion für magnetische Aufzeichnungsträger, bei dem magnetisch anisotropes Material in einem Polymerbindemittel und in einem organischen Lösungsmittel dispergiert wird, dadurch gekennzeichnet, daß das magnetisch anisotrope Material einer Strahlmahlung unterzogen wird.

2. Verfahren nach Anspruch 1, dadurch gekennzeichnet, daß das magnetisch anisotrope Material zusammen mit dem Dispergiermittel strahlgemahlen wird.

3. Verfahren nach Anspruch 1, dadurch gekennzeichnet, daß das magnetisch anisotrope Material zusammen mit dem Dispergiermittel und Bindemittel strahlgemahlen wird.

4. Verfahren nach Anspruch 1, dadurch gekennzeichnet, daß das magnetisch anisotrope Material zusammen mit dem Dispergiermittel, Bindemittel und sonstigen Hilfsstoffen, wie Gleitmittel, strahlgemahlen wird.

5. Verfahren nach Anspruch 1, dadurch gekennzeichnet, daß das magnetisch anisotrope Material während seines Herstellungsprozesses im Stadium seiner Vorstufen strahlgemahlen wird.

6. Verfahren nach Anspruch 5, dadurch gekennzeichnet, daß das magnetisch anisotrope Material während seiner Herstellung im Stadium seiner Vorstufen zusammen mit Ausrüstungsstoffen und/oder Dotierungsmaterialien strahlgemahlen wird.

7. Verfahren nach Anspruch 1 bis 6, dadurch gekennzeichnet, daß der Strahldruck während des Strahlmahlens zwischen 2 bar und 8 bar beträgt.

8. Verfahren nach Anspruch 1 bis 7, dadurch gekennzeichnet, daß das magnetisch anisotrope Material nach der Strahlmahlung zur Erhöhung seiner Schüttdichte einer Aufbaugranulierung unterzogen wird.

**Revendications**

1. Procédé de préparation d'une dispersion magnétique pour support d'enregistrement magnétique, selon lequel on disperse de la matière anisotrope magnétique dans un liant polymère et dans un solvant organique, caractérisé par le fait que la matière anisotrope magnétique est soumise à un broyage par projection en courant gazeux.

2. Procédé selon la revendication 1, caractérisé par le fait que la matière anisotrope magnétique est broyée par projection en courant gazeux ensemble avec le dispersant.

3. Procédé selon la revendication 1, caractérisé par le fait que la matière anisotrope magnétique est broyée par projection en courant gazeux ensemble avec le dispersant et le liant.

4. Procédé selon la revendication 1, caractérisé par le fait que la matière anisotrope magnétique est broyée par projection en courant gazeux ensemble avec le dispersant, le liant et divers auxiliaires, tels que lubrifiant.

5. Procédé selon la revendication 1, caractérisé par le fait que la matière anisotrope magnétique est broyée par projection en courant gazeux pendant son processus de préparation au stade de son état préliminaire.

6. Procédé selon la revendication 1, caractérisé par le fait que la matière anisotrope magnétique est broyée par projection en courant gazeux pendant son processus de préparation au stade de son état préliminaire ensemble avec des produits de finissage et/ou des matériaux de dopage.

7. Procédé selon la revendication 1 à 6, caractérisé par le fait que la pression de projection pendant le broyage par projection en courant gazeux est comprise entre 2 bar et 8 bar.

8. Procédé selon la revendication 1 à 7, caractérisé par le fait que la matière anisotrope magnétique est soumise après le broyage par projection en courant gazeux à une granulation de structure pour élever sa densité apparente.

**Claims**

1. A process for the preparation of a magnetic dispersion for magnetic recording media, in which a magnetically anisotropic material is dispersed in a polymer binder and in an organic solvent, wherein the magnetically anisotropic material is worked in a jet mill.

2. A process as claimed in claim 1, wherein the magnetically anisotropic material is worked in a jet mill together with the dispersant.

3. A process as claimed in claim 1, wherein the magnetically anisotropic material is worked in a jet mill together with the dispersant and the binder.

4. A process as claimed in claim 1, wherein the magnetically anisotropic material is worked in a jet mill together with the dispersant, the binder and other assistants, such as lubricants.

5. A process as claimed in claim 1, wherein the magnetically anisotropic material is subjected to jet milling during its preparation process and at the stage of its intermediate.

6. A process as claimed in claim 5, wherein the magnetically anisotropic material is subjected to jet milling during its preparation and at the stage of its intermediate, the material being milled together with coating agents and/or doping materials.

7. A process as claimed in any of claims 1 to 6, wherein the jet pressure during milling is from 2 to 8 bar.

8. A process as claimed in any of claims 1 to 7, wherein the magnetically anisotropic material, after being worked in a jet mill, is pelletized in order to increase its bulk density.